# EUROPÄISCHE PATENTSCHRIFT

(11) **EP 0 646 610 B1**
(45) Veröffentlichungstag und Bekanntmachung des Hinweises auf die Patenterteilung: **10.03.1999**
(21) Anmeldenummer: 94114859.5
(22) Anmeldetag: 21.09.1994
(51) Int. Cl.: C08G 18/10

(54) **Thermoplastische Polyurethanharnstoffe, ein Verfahren zu ihrer Herstellung und ihre Verwendung**
Thermoplastic polyurethane ureas, preparation process and use thereof
Polyuréthane urées thermoplastiques, leur procédé de préparation et leur application

(30) Priorität: 04.10.1993 DE 4333776
(43) Veröffentlichungstag der Anmeldung: 05.04.1995
(73) Patentinhaber: BAYER AG, 51368 Leverkusen (DE)
(72) Erfinder: Kirchmeyer, Stephan, Dr., D-51373 Leverkusen (DE); Müller, Hanns-Peter, Dr., D-51519 Odenthal (DE); Wussow, Hans-Georg, Dr., D-40597 Düsseldorf (DE); Rehbold, Bodo, Dr., D-50858 Köln (DE)

(56) Entgegenhaltungen:
- DE-A- 2 906 159
- DE-A- 4 039 151

## Beschreibung

Polyurethanharnstoffe aus isocyanathaltigen Vorpolymeren und Wasser werden in US-PS 4 049 632 und US-PS 4 062 834 beschrieben. Die in US-PS 4 049 632 beschriebenen Polyurethanharnstoffe lassen sich jedoch nur aus bestimmten Ausgangsstoffen, ausschließlich im diskontinuierlichen Verfahren und mit Hilfe von verhältnismäßig aufwendigen Aufarbeitungsprozeduren herstellen. Nach US-PS 4 062 834 werden die Polyurethanharnstoffe durch Umsetzung eines Vorpolymers aus einem hydroxylfunktionellen Polyoxytetramethylen und 4,4'-Diphenylmethandiisocyanat in Lösung hergestellt und anschließend ausgefällt. Durch die großen Mengen an benötigten Lösungsmitteln ist auch diese Herstellungmethode für die technische Durchführung ungeeignet.

In US-PS 4 055 549 werden thermoplastisch verarbeitbare Polyurethane und ihre diskontinuierliche Herstellung in Substanz aus Toluylendiisocyanat, Polycaprolactondiol, einem notwendigen niedermolekularen Glykol und Wasser beschrieben. Nach US-PS 4 055 549 ist es jedoch nicht möglich, neben Wasser auf einen weiteren Diol-Kettenverlängerer zu verzichten. Dies ist jedoch von Nachteil, da bei Mischkettenverlängerung im allgemeinen schlechtere mechanische und thermische Eigenschaften erhalten werden als bei Verwendung von nur einem Kettenverlängerer. Die kontinuierliche Herstellung, insbesondere unter Verwendung von Reaktionsschneckenmachinen wird nicht erwähnt.

Nach EP-A 21 323 können Polyurethanharnstoffe auf Mehrwellenschneckenmaschinen hergestellt werden, wobei das Wasser an einer Stelle in die Schneckenmaschine zudosiert wird, an welcher das Reaktionsgemisch eine Temperatur von bevorzugt 170 bis 270°C aufweist, so daß sich in der Extrusionszone ein Wasserdampfdruck von mindestens 10 bar aufbaut. Das Problem dieses Verfahrens ist der hohe Druck des zur Reaktion nötigen Wasserdampfes und die zur Herstellung notwendigen hohen Reaktionstemperaturen. Einerseits muß der Wasserdampf durch ein besonderes Temperaturprofil am Entweichen aus der Reaktionsschnecke gehindert werden. Zum anderen bewirken die dadurch notwendigen hohen Reaktionstemperaturen eine Schädigung des Polymeren, da sich die Polyurethangruppe bereits bei Temperaturen ab 180°C zersetzt.

Aufgabe der Erfindung war es, Polyurethanharnstoffe zur Verfügung zu stellen, welche hervorragende mechanische und thermische Eigenschaften und gleichzeitig eine verbesserte Herstellbarkeit aufweisen, wobei unerheblich sein sollte, ob diese Polyurethanharnstoffe diskontinuierlich oder kontinuierlich, also z.B. unter Verwendung von Reaktionsschneckenmaschinen, hergestellt werden.

Überraschenderweise wurde nun gefunden, daß thermoplastische Polyurethanharnstoffe, herstellbar durch gegebenfalls stufenweise Reaktion von einer Polyisocyanatkomponente mit einer Komponente aus einer oder mehreren Verbindungen mit im Mittel mindestens 1,8 zerewitinoffaktiven Wasserstoffatomen und einem Molekulargewicht zwischen 400 und 10000, Wasser und gegebenfalls weiteren üblichen Hilfs- und Zusatzstoffen, sich nicht nur vorteilhaft herstellen lassen, sondern auch besonders gute mechanische und thermische Eigenschaften aufweisen, wenn das zur Reaktion benötigte Wasser unter Zusatz eines Emulgators in das Reaktionsgemisch eingetragen wird. Dies ist besonders deshalb überraschend und für den Fachmann nicht vorhersehbar, da nach dem bisherigen Urteil der Fachleute Polyurethanharnstoffe, welche bei Starttemperaturen unter 100°C hergestellt wurden, eine ungünstige Verteilung von Polyharnstoffsegmenten und Polyurethanweichsegmenten zur Folge haben (siehe EP-A 21323, S. 2, Z 15-18). Die Produkte werden als weniger homogen, Gelteilchen enthaltend, bei gleicher Rezeptur trüber und mit geringer Löslichkeit beschrieben (s. EP 21 323, S. 26, Z. 25 bis 28).

Dies ist überraschenderweise nicht der Fall. Die erfindungsgemäßen Polyurethanharnstoffe lassen sich diskontinuierlich sowie kontinuierlich, z.B. in Mehrwellenschneckenmaschinen, herstellen. Besonders bei Starttemperaturen unter 100°C werden absolut homogene, von Gelteilchen freie und gut lösliche Polyurethanharnstoffe erhalten, welche hervorragende mechanische und thermische Eigenschaften aufweisen. Sie sind zudem thermoplastisch verarbeitbar.

Gegenstand der Erfindung sind deshalb thermoplastische Polyurethanharnstoffe, herstellbar durch gegebenfalls stufenweise Reaktion von
a) einem oder mehreren Polyisocyanaten mit
b) einer oder mehreren Verbindungen mit im Mittel mindestens 1,8 zerewitinoffaktiven Wasserstoffatomen und einem Molekulargewicht zwischen 400 und 10000,
c) Wasser und
d) gegebenfalls weiteren üblichen Hilfs- und Zusatzstoffen mit Ausnahme von Diaminen,
dadurch gekennzeichnet, daß das Wasser zusammen mit einer wirksamen Menge eines oder mehrerer Emulgatoren bei Temperaturen von 30°C bis 110°C in das Reaktionsgemisch eingebracht wird und die Umsetzung zum Polyurethanharnstoff bei Temperaturen von 50°C bis 220°C erfolgt.

Gegenstand der Erfindung ist weiterhin ein Verfahren zur Herstellung von Polyurethanharnstoffen aus
a) einem oder mehreren Polyisocyanaten,
b) einer oder mehreren Verbindungen mit im Mittel mindestens 1,8 zerewitinoffaktiven Wasserstoffatomen und einem Molekulargewicht zwischen 400 und 10000,
c) Wasser und
d) gegebenfalls weiteren üblichen Hilfs- und Zusatzstoffen mit Ausnahme von Diaminen,
dadurch gekennzeichnet, daß das Wasser zusammen mit einer wirksamen Menge eines oder mehrerer Emulgatoren bei Temperaturen von 30°C bis 110°C in das Reaktionsgemisch eingebracht wird und die Umsetzung zum Polyurethanharnstoff bei Temperaturen von 50°C bis 220°C erfolgt.

Gegenstand der Erfindung ist schließlich die Verwendung der Polyurethanharnstoffe gemäß Anspruch 1 bis 4 zur Herstellung von Form-, Preß- und Spritzgußteilen, Thermoformteilen, Halbzeugen, Platten, Behältern, Geräteteilen, Gehäusen, Rollen, Zahnrädern, Maschinen- und Fahrzeugteilen, Walzen, elastischen Überzügen, Folien, Ummantelungen, Schläuchen, Kathetern, Dichtungen, Profilen, Lagerschalen und Fäden.

Als Ausgangsstoffe a) können aliphatische, cycloaliphatische, araliphatische, aromatische und heterocyclische Polyisocyanate oder beliebige Gemische dieser Polyisocyanate verwendet werden, wie sie z.B. in HOUBEN-WEYL "Methoden der organischen Chemie, Band E20 "Makromolekulare Stoffe", Herausgeber H. Bartl, J. Falbe, Georg Thieme Verlag, Stuttgart, New York 1987, S. 1587-1593, beschrieben werden. Dies sind z.B. Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-Diisocyanat sowie beliebige Gemische dieser Isomeren, 1-Isocyanato-3,3,5-trimethyl-5-isocyanatomethyl-cyclohexan, 2,4-und 2,6-Hexahydrotoluylendiisocyanat sowie beliebige Gemische dieser Isomeren, Hexahydro-1,3- und/oder -1,4-phenylendiisocyanat, Perhydro-2,4'-und/oder -4,4'-diphenylmethandiisocyanat, Norbornan-Diisocyanate (z.B. US-PS 3 492 330), 1,3-und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat.

Erfindungsgemäß bevorzugt sind aromatische Diisocyanate, insbesondere die gegebenenfalls alkylsubstituierten Toluylen- und Diphenylmethandiisocyanate, aliphatische Diisocyanate, insbesondere Hexamethylendiisocyanat und cycloaliphatische Diisocyanate wie 1-Isocyanato-3,3,5-trimethyl-5-isocyanatomethyl-cyclohexan, Perhydro-2,4'-und/oder -4,4'-diphenylmethandiisocyanat.

Gegebenfalls können auch höherfunktionelle Isocyanate wie z.B. Triphenylmethan-4,4',4"-triisocyanat, Polyphenyl-polymethylenpolyisocyanate, wie sie durch die Anilin-Formaldehyd-Kondensation und anschließende Phosgenierung erhalten werden sowie die bei der technischen Isocyanatherstellung anfallenden, Isocyanatgruppen aufweisenden Destillationsrückstände, gegebenenfalls in einem oder mehreren der vorgenannten Polyisocyanate mitverwendet werden. Dabei ist jedoch darauf zu achten, daß eine mittlere Funktionalität von zwei nicht wesentlich überschritten wird, wenn die Polyurethanharnstoffe thermoplastisch oder aus Lösung verarbeitet werden sollen. Gegebenfalls müssen Reaktionspartner mit höherer Funktionalität durch Mitverwendung anderer Reaktionspartner mit einer niedrigeren Funktionalität als zwei wieder ausgeglichen werden.

Dafür geeignete monofunktionelle Isocyante sind z.B. Stearylisocyanat, Cyclohexylisocyanat und Phenylisocyanat.

Ausgangsstoffe b) sind Verbindungen mit im Mittel mindestens 1,8 zerewitinoffaktiven Wasserstoffatomen und einem Molekulargewicht zwischen 400 und 10000. Hierunter versteht man neben Aminogruppen, Thiolgruppen oder Carboxylgruppen aufweisende Verbindungen insbesondere zwei bis acht Hydroxylgruppen aufweisende Verbindungen, speziell solche vom Molekulargewicht 450 bis 6000, bevorzugt solche vom Molekulargewicht 600 bis 4500, z.B. Hydroxylgruppen aufweisende Polyester, Polyether, Polycarbonate und Polyesteramide.

Die in Frage kommenden Polyester sind z.B. Umsetzungsprodunkte von mehrwertigen, vorzugsweise zweiwertigen und gegebenenfalls zusätzlich dreiwertigen Alkoholen mit mehrwertigen, vorzugsweise zweiwertigen Carbonsäuren oder deren veresterungsfähigen Derivaten. Die Polycarbonsäuren können aliphatischer, cycloaliphatischer, aromatischer und/oder heterocyclischer Natur sein, z.B. durch Halogenatome, substituiert und/oder ungesättigt sein.

Als Beispiele für solche Carbonsäuren und deren Derivate seien genannt: Bernsteinsäure, Adipinsäure, Phthalsäure, Isophthalsäure, Phthalsäureanhydrid, Tetrahydrophthalsäureanhydrid, Hexahydro-phthalsäureanhydrid, Tetrachlorphthalsäureanhydrid, Endo-methylentetrahydrophthalsäureanhydrid, Maleinsäure, Maleinsäureanhydrid, Fumarsäure, dimerisierte und trimerisierte ungesättigte Fettsäuren, ggf. in Mischung mit monomeren ungesättigten Fettsäuren, Terephthalsäuredimethylester und Terephthalsäurebisglykolester.

Als mehrwertige Alkohole kommen z.B. Ethylenglykol, Propylenglykol-(1,2) und-(1,3), Butylenglykol-(1,4) und -(2,3), Hexandiol-(1,6), Octandiol-(1,8), Neopentylglykol, 1,4-Bis(hydroxymethyl)cyclohexan, Trimethylolpropan, Trimethylolethan, ferner Di-, Tri-, Tetra- und höhere Polyethylenglykole, Di- und höhere Polypropylenglykole sowie Di- und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar. Es können jedoch auch die aus der Fettchemie bekannten hydroxyfunktionellen Polyester wie z.B. Rizinusöl und dessen Umesterungsprodukte verwendet werden.

Die in Frage kommenden Polyether sind solche der an sich bekannten Art und werden z.B. durch Polymerisation von Epoxiden wie Ethylenoxid, Propylenoxid, Butylenoxid, Styroloxid oder Epichlorhydrin oder von Tetrahydrofuran mit sich selbst, z.B. in Gegenwart von Lewis-Katalysatoren wie Bortrifluorid, oder durch Anlagerung der Epoxide, vorzugsweise von Ethylenoxid und Propylenoxid, ggf. im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Wasser, 4,4'-Dihydroxydiphenylpropan, Anilin, Ethanolamin oder Ethylendiamin hergestellt. Auch Hydroxylgruppen aufweisende Polybutadiene sind geeignet.

Als Hydroxylgruppen aufweisende Polycarbonate kommen solche der an sich bekannten Art in Betracht, die z.B. durch Umsetzung von Diolen wie Propandiol(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-OS 1 694 080, 2 221 751).

Zu den Polyesteramiden und Polyamiden zählen z. B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Ebenfalls geeignet sind Polyhydroxyverbindungen, in welchen hochmolekulare Polyaddukte bzw. Polykondesate oder Polymerisate in feindisperser, gelöster oder aufgepfropfter Form enthalten sind. Derartige modifizierte Polyhydroxyverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen laßt. Derartige Verfahren sind beispielsweise in DE-AS 1 168 075 und 1 126 142, sowie DE-OS 2 324 134, 2 423 984, 2 512 385, 2 513 815, 2 220 796, 2 550 797, 2 550 833, 2 550 862, 2 633 293 und 2 639 254 beschrieben. Es ist aber auch möglich, gemäß US-PS 3 869 413 bzw. DE-OS 2 550 860 eine fertige wäßrige Polymerdispersion mit einer Polyhydroxyverbindung zu vermischen und anschließend aus dem Gemisch Wasser zu entfernen.

Auch durch Vinylpolymerisation modifizierte Polyhydroxylverbindungen, wie sie z.B. durch Polymerisation von Styrol und Acrylnitril in Gegenwart von Polyethern (US-PS 3 383 351, 3 323 093, 3 110 695, DE-AS 1 152 536) oder Polycarbonatpolyolen (DE-PS 1 769 795, US-PS 3 637 909) erhalten werden, sind geeignet.

Selbstverständlich können Mischungen der obengenannten Verbindungen mit mindestens zwei gegenüber Isocyanaten reaktionsfähigen Wasserstoffatomen mit einem Molekulargewicht von 400 bis 10 000, z.B. Mischungen von Polyethern und Polyestern, eingesetzt werden.

Ferner sind geeignet: endständige aromatische primäre Aminogruppen aufweisende Polyetherpolyamine, wie sie beispielsweise gemäß den in EP-A-79 536, DE-OS 2 948 419, DE-OS 2 019 432, DE-OS 2 619 840, US-PS 3 808 250, 3 975 426 oder 4 016 143 beschriebenen Verfahren zugänglich sind sowie endständige aliphatische Aminogruppen aufweisende und ggf. verzweigte Polyethylen- und/oder polypropylenglykole.

Vertreter der genannten defindungsgemäß zu verwendenden Verbindungen sind z.B. in High Polymers, Vol. **XVI**, "Polyurethanes, Chemistry and Technologie", verfaßt von Saunders und Frisch, Interscience Publishers, New York, London, Band I, 1962, Seiten 32 und 42 und Seiten 44 bis 54 und Band II, 1964, Seiten 5 bis 6 und 198 bis 199, sowie im Kunststoff-Handbuch, Band VII, verfaßt von Vieweg und Höchtlen, Carl-Hanser-Verlag, München, 1966, z.B. auf den Seiten 45 bis 71, beschrieben.

Selbstverständlich können auch beliebige Mischungen der oben beschriebenen Verbindungen mit mindestens 1,8 gegenüber Isocyanat reaktionfähigen Wasserstoffatomen mit einem Molekulargewicht von 400 bis 10000, z.B. Mischungen aus Polyethern und Polyestern, eingesetzt werden.

Gegebenfalls können in Komponente d) auch geringere Mengen von Verbindungen mit mindestens einem gegenüber Isocyanaten reaktionsfähigen Wasserstoffatom mit einem Molekulargewicht von 32 bis 400 mitverwendet werden. Gegenüber Isocyanaten monofunktionelle Verbindungen können in Komponente d) in Anteilen bis zu 10 Gew.-%, bezogen auf Polyurethanharnstoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Ethylhexanol, Octanol, Dodecanol, die verschiedenen Amylakohole, Cyclohexanol und Ethylenglykolmonomethylether.

Di- oder polyfunktionelle Verbindungen mit Ausnahme von Diaminen können in Komponente d) erfindungsgemäß in einer Menge mitverwendet werden, daß das Äquivalentverhältnis dieser Verbindungen zum Äquivalentverhältnis der Komponente c) maximal 1:1 beträgt. Bevorzugt beträgt das Äquivalentverhältnis maximal 0,5:1. Besonders bevorzugt werden keine weiteren Verbindungen mit mindestens zwei gegenüber Isocyanaten reaktionsfähigen Wasserstoffatomen und einem Molekulargewicht von 32 bis 400 mitverwendet.

Als Beispiele für derartige Verbindungen seien genannt: Di- und Polyole wie Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis(hydroxymethyl)cyclohexan, 2-Methyl-1,3-propandiol, Glycerin, Trimethylolpropan, Hexantriol-(1,2,6), Trimethylolethan, und Pentaerythrit, Di-, Tri-, Tetra- und höhere Polyethylenglykole mit einem Molekulargewicht bis 400, sowie Di- und höhere Polypropylenglykole mit einem Molekulargewicht bis 400, 4,4'-Dihydroxy-diphenylpropan, Di(hydroxymethyl)hydrochinon, Ethanolamin, Diethanolamin, N-Methyldiethanolamin, Triethanolamin und 3-Aminopropanol.

Die gegenüber Isocyanat reaktiven Verbindungen aus Komponente b), c) und d) sollten so ausgewählt werden, daß die mittlere Funktionalität zwei nicht wesentlich überschreitet, wenn thermoplastisch oder aus Lösung verarbeitbare Polyurethanharnstoffe hergestellt werden sollen. Höherfunktionelle Verbindungen sollten daher durch Mitverwendung der genannten monofunktionellen Ausgangskomponenten kompensiert werden.

Das Wasser c) kann erfindungsgemäß auch in Form von Kristallwasser oder adsorptiv gebunden in die Reaktion eingebracht werden. Die erfindungsgemäß einzusetzende Wassermenge beträgt bevorzugt mindestens 100 % des theoretisch berechenbaren Wertes. Gegebenenfalls kann es aber auch sinnvoll sein, 800 oder gar über 5000 % der theoretisch berechenbaren Menge einzusetzen. Die theorethisch einsetzbare Menge wird aus dem Überschuß an Isocyanatgruppen gegenüber den zerewitinoffaktiven Wasserstoffatomen berechnet.

Bei dem Emulgator handelt es sich im allgemeinen um anionische, kationische oder neutrale niedermolekulare, oligomere oder polymere Emulgatoren, Tenside oder Schutzkolloide, die bevorzugt in einer Menge von 5 bis 100 Gew.%, besonders bevorzugt 10 bis 70 Gew.% bezogen auf die Masse der Komponente c) venvendet wird.

Beispiele von anionischen niedermolekularen, oligomeren bzw. polymeren Emulgatoren oder Tensiden sind Alkali- oder Erdalkalisalze von Fettsäuren, z.B. Natriumsalze von gesättigten Fettsäuren mit 10 bis 21 Kohlenstoffatomen, Natriumsalze von ungesättigten Fettsäuren mit 12 bis 18 Kohlenstoffatomen, chlorsulfonierte und verseifte Paraffinöle, Alkylethersulfonate wie Ether von α-Sulfo-ω-hydroxy-polyethylenglykolen mit z.B. 1-Methylphenylethylphenol, Nonylphenol oder Alkylethern mit 12 bis 18 Kohlenstoffatomen, Arylalkylsulfonate wie beispielsweise mit geradkettigen oder verzweigten Butylgruppen versehene Naphthalinsulfonsäuren oder Alkylsulfate wie die Natriumsalze von langkettigen Schwefelsäurealkylestern.

Beispiele von kationischen niedermolekularen, oligomeren bzw. polymeren Emulgatoren oder Tensiden sind die Salze von langkettige Alkanreste tragenden Aminen mit 8 bis 22 Kohlenstoffatomen, die mit Säuren oder durch Alkylierung zu den Ammoniumverbindungen umgesetzt wurden, sowie analoge Phosphor- und Schwefelverbindungen.

Beispiele nichtionischer oligomerer bzw. polymerer Emulgatoren oder Tenside sind Alkylpolyglykolether oder -ester wie ethoxylierte gesättige oder ungesättigte Bindungen tragende langkettige Alkohole z.B. mit 12 bis 18 Kohlenstoffatomen, ethoxyliertes Rizinusöl, ethoxylierte (Kokos)fettsäuren, ethoxyliertes Sojabohnenöl, ethoxylierte Resin- oder Rosinsäuren, ethoxylierter und ggf. propoxylierter Butyldiglkykol oder ethoxylierte Alkylarylether wie ethoxyliertes geradkettiges und/oder verzweigtes Nonylphenol oder Octylphenol oder benzyliertes p-Hydroxybiphenyl. Als nichtionische Emulgatoren können auch Polyoxyethylenglykole oder Polyoxyalkylenglykole mit einem Gehalt an Polyoxyethylensegmenten von mindestens 20 Gew.-%, vorzugsweise mindestens 30 Gew.-% verwendet werden.

Geeignet als Emulgatoren oder Tenside sind weiterhin ethoxylierte langkettige Alkyl- oder Alkenylamine, Lecithin, mit langkettigen Alkylisocycanten modifizierte Umsetzungsprodukte aus Polyethylenglykolen und Diisocyanaten, Umsetzungsprodukte von Rapsöl und Diethanolamin oder ethoxylierte Umsetzungsprodukte aus Sorbitan und langkettigen Alkan- oder Alkencarbonsäuren.

Geeignet sind schließlich sogenannte Schutzkolloide, wie z.B. Polyvinylalkohole oder wasserlösliche Cellulosederivate wie Methylcellulose.

Bevorzugt sind nichtionische Emulgatoren, besonders bevorzugt sind Polyoxyethylenglykole oder Polyoxyalkylenglykole mit einem Gehalt an Polyoxyethylensegmenten mindestens 30 Gew.-%.

Als weitere Hilfs- und Zusatzmittel der Komponente d) können Katalysatoren der an sich bekannten Art verwendet werden, z.B. tertiäre Amine, wie Triethylamin, N-Methylmorpholin, N-Ethylmorpholin, N,N,N',N'-Tetramethylethylendiamin, Pentamethydiethylentriamin, 1,4-Diazabicyclo[2,2,2]octan, N-Methyl-N'-dimethylaminoethylpiperazine (DE-OS 2 636 787), N,N-Dimethylbenzylamin, N,N-Dimethylcyclohexylamin, 2-Methylimidazol, monocyclische und bicyclische Amidine (DE-OS 1 720 633), Bis-(dialkylamino)alkylether (US-PS 3 330 782, DE-AS 1 030 558, DE-OS 1 804 361, 2 618 280) sowie Amidgruppen (vorzugsweise Formamidgruppen aufweisende tertiäre Amine gemäß DE-OS 2 523 633 und 2 732 292). Als Katalysatoren können auch weitere organische Metallverbindungen, insbesondere organische Zinnverbindungen, verwendet werden. Als organische Zinnverbindungen kommen neben schwefelhaltigen Verbindungen wie Di-n-octylzinnmercaptid (DE-AS 1 769 367, US-PS 3 645 927) vorzugsweise Zinn(II)salze von Carbonsäuren wie Zinn(II)acetat, Zinn(II)octoat, und Zinn(II)laurat sowie Zinn(IV)-Verbindungen, wie z.B. Dibutylzinnoxid, Dibutylzinndilaurat oder Dioctylzinndiacetat in Betracht. In Betracht kommen weiterhin: Titan-, Bismuth- und Antimonverbindungen wie z.B. Antimontriisopropoxid, Antimonoctoat, Antimontallat, Bismuthsalze von Carbonsäuren mit 2 bis 20 Kohlenstoffatomen wie z.B. Bismuthtrioctanoat, Dibutylbismuthoctanoat, Triphenylbismuthdidecanoat und Dibutyltitanbis(acetylacetonat).

Weitere Vertreter von verwendbaren Katalysatoren sowie die Einzelheiten über die Wirkungsweise der Katalysatoren sind im Kunststoff-Handbuch Band VII, Polyurethane", herausgegeben von Vieweg und Höchtlen, Carl-Hanser-Verlag, München 1966 z.B. auf den Seiten 96 bis 102 beschrieben.

Die Gesamtmenge an Katalysatoren in den erfindungsgemäßen Polyurethanharnstoffen beträgt in der Regel zwischen etwa 0,003 und 5 Gew-%, bevorzugt zwischen 0,05 und 2 Gew-%, der Gesamtmenge an reaktiver Zusammensetzung.

Als weitere Zusatz- und Hilfsstoffe kommen in Betracht: Pigmente, Farbstoffe, Flammschutzmittel wie z.B. Tris(chlorethyl)phosphat, Trikresylphosphat oder Ammoniumphosphat und -pyrophosphat, Stabilisatoren gegen Alterungs- und Witterungseinflüsse, Weichmacher, Gleit- und Entformungsmittel, fungistatisch und bakteriostatisch wirkende Substanzen sowie Füllstoffe wie Calciumcarbonat, Kieselgel, Bariumsulfat, Calcuimsulfat, Kaolin, Bentonit, Zeolithe, gemahlenes Glas, Glaskugeln, Glas-, Kunststoff- oder Kohlefasern, Quarzsand oder Quarzmehl, Siliciumcarbid, Aluminiumtrihydrat, Kreide, Dolomit oder Mischungen hiervon. Zu den weiteren Zusatz- und Hilfsstoffen gehören gegebenfalls auch Lösungsmittel, in denen die Umsetzung zum Polyurethanharnstoff durchgeführt wird.

Das Äquivalentverhältnis zwischen der Komponente b) und der Komponente c) in den erfindungsgemäßen Polyurethanharnstoffen beträgt bezogen auf die Ausgangsstoffe vor Umsetzung bevorzugt zwischen 5:1 und 1:30, wobei ggf. mitverwendete Verbindungen mit mindestens zwei gegenüber Isocyanaten reaktionsfähigen Wasserstoffatomen mit einem Molekulargewicht von 32 bis 400 der Komponente c) zuzurechnen sind.

Das Verhältnis aus Isocyanatäquivatenten aus Komponente a) und der Summe der Äquivalente an zerewitinoffaktiven Wasserstoffatomen aus Komponente b) und Komponente c) ist in den erfindungsgemäßen Polyurethanharnstoffen bezogen auf die Ausgangsstoffe vor Umsetzung bevorzugt kleiner als 1,1:1.

Die erfindungsgemäßen Polyurethanharnstoffe können diskontinuierlich oder kontinuierlich, z.B. unter Verwendung von Mehrwellenschneckenmaschinen hergestellt werden. Die Herstellung kann nach dem sogenannten One-Shot-Verfahren, d.h. durch Zusammengeben der Reaktionskomponenten und anschließendes Ausreagieren zum Polymer oder nach dem Prepolymerverfahren durchgeführt werden. Nach dem Prepolymerverfahren wird in mehreren Schritten
i) aus zumindest Teilen der Komponente a) und zumindest Teilen der Komponente b) ein Vorpolymer hergestellt und
ii) dieses Vorpolymer zusammen mit den restlichen Ausgangsstoffen und den verbliebenen Anteilen der Komponenten a) und b) zum Polyurethanharnstoff umgesetzt.

Das Prepolymerverfahren besitzt den Vorteil, daß in einer Vorreaktion ein Großteil der Urethanbindungen geknüpft wird. Die Möglichkeit der Bildung von schwerlöslichen und an Polyurethansegmente nicht angekoppelten Polyharnstoffen wird dadurch vielfach umgangen.

Wichtig ist in jedem Fall, daß das Wasser mit Hilfe einer wirksamen Menge eines oder mehrerer Emulgatoren in das Reaktionsgemisch eingebracht wird. Die Mischung aus Wasser und Emulgator kann getrennt oder in Verbindung mit weiteren Komponenten in das Reaktionsgemisch eingebracht werden. Ungünstig sind Mischungen aus Wasser und isocyanathaltigen Verbindungen der Komponente a) oder isocyanathaltigen Vorpolymeren, da dies zu unkontrollierten Vorreaktionen führen kann.

In einer besonderen Variante der Herstellung der Polyurethanharnstoffe wird das Wasser der Komponente c) zusammen mit dem Emulgator bei Temperaturen zwischen 30°C und 110°C in das Reaktionsgemisch bestehend aus einem Vorpolymer aus den Komponenten a) und b) sowie den restlichen Ausgangsstoffen diskontinuierlich eingetragen und die Umsetzung zum Polyurethanharnstoff bei Temperaturen zwischen 50°C und 110°C durchgeführt.

In einer weiteren Variante wird die Herstellung der Polyurethanharnstoffe kontinuierlich in einer ggf. mit Knetelementen bestückten Mehrwellenschneckenmaschine mit selbstreinigender Schneckengeometrie bei Temperaturen zwischen 50°C und 220°C durchgeführt. Sinnvollerweise setzt man Schneckenmaschinen ein, die aus mehreren getrennt heiz- bzw. kühlbaren Gehäuseteilen aufgebaut und nach Einzugszonen (Zudosierung der Reaktionskomponenten), Reaktionszonen und Extrusionszone gegliedert sind. Bei der Durchführung des erfindungsgemäßen Verfahrens werden entweder alle Komponente einzeln oder teilweise vermischt an der gleichen Stelle (bevorzugt in das erste Gehäuse) oder an verschiedenen Stellen kontinuierlich in die Schneckenmaschine eingespeist. Das Wasser der Komponente c) wird zusammen mit dem Emulgator und ggf. vorvermischt mit weiteren Komponenten bei Temperaturen zwischen 30°C und 180°C, vorzugsweise 50°C und 150°C zudosiert. Besonders bevorzugt werden die restlichen Ausgangskomponenten bis auf das Wasser aus Komponente c), Emulgator und ggf. Zusatzstoffe am Anfang der Reaktionschnecke eingespeist und das Wasser aus Komponente c), Emulgator und ggf. Zusatzstoffe in Förderrichtung gesehen hinter den übrigen Ausgangsstoffen in die Schneckenmaschine zudosiert. Günstig ist eine Reaktionsführung, die es erlaubt, das Wasser/Emulgatorgemisch mit den restlichen Reaktionskomponenten in der Schnecke zu vermischen, bevor ein nennenswerter Molekulargewichtsaufbau erfolgt. Dies wird beispielsweise dadurch erzielt, daß die Zone, die in Förderrichtung gesehen hinter dem Einspeisungspunkt der Komponente c) liegt, eine Temperatur aufweist, die kleiner als 100°C, bevorzugt kleiner als 80°C beträgt.

Die erfindungsgemäßen Polyurethanharnstoffe haben ein hohes mechanisches Eigenschaftsniveau, vorallem bezüglich ihrer elastischen Eigenschaften wie Zugdehnung und Zugfestigkeit, sowie bezüglich ihrer thermischen Eigenschaften wie Wärmestand. Die erfindungsgemäßen Polyurethanharnstoffe können auf übliche Weise zur Herstellung von Form-, Preß- und Spritzgußteilen, Thermoformteilen, Halbzeugen, Platten, Behältern, Geräteteilen, Gehäusen, Rollen, Zahnrädern, Maschinen- und Fahrzeugteilen, Walzen, elastischen Überzügen, Folien, Ummantelungen, Schläuchen, Kathetern, Dichtungen, Profilen, Lagerschalen und Fäden verwendet werden. Sie können generell in vorteilhafter Weise dort eingesetzt werden, wo thermoplastisch verarbeitbare Materialien eingesetzt werden.

Die vorliegende Erfindung soll nun anhand der nachfolgenden Ausführungsbeispiele erläutert werden.

### Verwendete Einsatzstoffe:

- Polyol A:: Polyoxytetramethylenglykol mit einem mittleren Molekulargewicht (Mn) von 2000 g/Mol.
- Polyol B:: Polyesterpolyol aus Hexandiol, Neopentylglykol und Adipinsäure mit einem mittleren Molekulargewicht (Mn) von 1700 g/Mol.
- Polyol C:: Polyoxytetramethylenglykol mit einem mittleren Molekulargewicht (Mn) von 1000 g/Mol.
- Diisocyanat A:: Perhydro-4,4'-diphenylmethandiisocyanat mit einem Anteil von 20 Gew.-% trans,trans-, 50 Gew.-% trans,cis und 30 Gew.-% cis,cis-Isomerem.
- Diisocyanat B:: 4,4'-Methylendiphenyldiisocyanat.

### Beispiele 1 bis 5 (Polyurethanharnstoff auf der Basis eines cycloaliphatischen Diisocyanates)

In einem 3 l-Dreihalskolben mit Innenthermometer, mechanischer Rührung, und Stickstoffeinlaß werden 1600 g (1,6 Hydroxyläquivalente) Polyol A und 419,2 g (3,2 Isocyanatäquivalente) Diisocyanat A gegeben, und unter Stickstoffatomosphäre bei 100°C solange gerührt, bis der Isocyanatgehalt auf 3,25 Gew.-% gesunken ist. Man senkt die Temperatur auf 60°C und gibt eine Mischung aus 72,0 g Wasser, 50,0 g Emulgator (s. Tabelle 1) und 6,8 g einer 33 gewichtsprozentigen Lösung von 1,4-Diaza[2,2,2]bicyclooctan in Dipropylenglykol hinzu. Es wird eine Minute gerührt und die Reaktionsmasse auf eine PTFE-Folie gegossen. Die Reaktionsmasse wird in einem Polyethylenbeutel insgesamt 48 h bei 70'°C ausreagiert.

**Tabelle 1**

| Beispiel | Emulgator |
|---|---|
| 1 | Alkoxyliertes n-Butanol (Gehalt an Oxyethyleneinheiten von 85 Gew.-%, mittleres Molekulargewicht 2250 g/Mol) |
| 2 | Ethoxyliertes Nonylphenol mit einem Gehalt an Oxyethyleneinheiten von 66 Gew.-%, mittleres Molekulargewicht 660 g/Mol) |
| 3 | 3-Benzyl-4-hydroxybiphenylpolyglykolether |
| 4 | Polyoxyalkylenglykol (Gehalt an Oxyethyleneinheiten von 97 Gew.-%, mittleres Molekulargewicht 600 g/Mol) |
| 5 | Polyoxyalkylenglykol (Anteil an Oxyethyleneinheiten 49 Gew.-%, mittleres Molekulargewicht 2000 g/Mol) |

Der Polyurethanharnstoff aus Beispiel 5 wird zu einem Granulat zerkleinert, 5 Stunden bei 110°C getrocknet und in einer üblichen Spritzgußmaschine 40 x 6 x 2 mm-Prüfstäbe hergestellt. Der Polyurethanharnstoff besitzt folgende Eigenschaften:

| | |
|---|---|
| Härte | 71 Shore A |
| Rückprallelastizität | 60 % |
| Zugfestigkeit | 27,1 MPa |
| Reißdehnung | 614 % |
| Spannung bei 100 % | 1,8 MPa |
| Spannung bei 300 % | 3,2 MPa |

### Beispiel 6 (Polyurethanharnstoff auf der Basis eines cycloaliphatischen Diisocyanates)

In einem 5 1-Dreihalskolben mit Innenthermometer, mechanischer Rührung, und Stickstoffeinlaß werden 2016 g (2,4 Hydroxyläquivalente) Polyol B und 628,8 g (4,8 Isocyanatäquivalente) Diisocyanat A gegeben, und unter Stickstoffatomosphäre bei 100°C solange gerührt, bis der Isocyanatgehalt auf 3,81 Gew.-% gesunken ist. Man senkt Temperatur auf 60°C und gibt eine Mischung aus 94,4 g Wasser, 65,48 g des Emulgators aus Beispiel 5 und 8,88 g einer 33 gewichtsprozentigen Lösung von 1,4-Diaza[2,2,2]bicyclooctan in Dipropylenglykol hinzu. Es wird eine Minute gerührt und die Reaktionsmasse auf eine PTFE-Folie gegossen. Die Reaktionsmasse wird in einem Polyethylenbeutel insgesamt 48 h bei 70°C ausgehärtet. Der Polyurethanharnstoff wird zu einem Granulat zerkleinert, 5 Stunden bei 110°C getrocknet und in einer üblichen Spritzgußmaschine 40 x 6 x 2 mm-Prüfstäbe hergestellt. Der Polyurethanharnstoff besitzt folgende Eigenschaften:

| | |
|---|---|
| Härte | 70 Shore A |
| Rückprallelastizität | 40 % |
| Zugfestigkeit | 28,8 MPa |
| Reißdehnung | 600 % |
| Spannung bei 100 % | 1,8 MPa |
| Spannung bei 300 % | 3,5 MPa |

### Beispiel 7 (Polyurethanharnstoff auf der Basis eines cycloaliphatischen Diisocyanates)

In einem 3 l-Dreihalskolben mit Innenthermometer, mechanischer Rührung, und Stickstoffeinlaß werden 1600 g (3,2 Hydroxyläquivalente) Polyol C und 834,4 g (6,4 Isocyanatäquivalente) Diisocyanat A gegeben, und unter Stickstoffatomosphäre bei 100°C solange gerührt, bis der Isocyanatgehalt auf 5,5 Gew.-% gesunken ist. Man senkt die Temperatur auf 60°C und gibt eine Mischung aus 144,0 g Wasser, 100,0 g des Emulgators aus Beispiel 5 und 8,0 g einer 33 gewichtsprozentigen Lösung von 1,4-Diaza[2,2,2]bicyclooctan in Dipropylenglykol dazu. Es wird eine Minute gerührt und die Reaktionsmasse auf eine PTFE-Folie gegossen. Die Reaktionsmasse wird in einem Polyethylenbeutel insgesamt 48 h bei 70°C ausreagieren. Der Polyurethanharnstoff wird zu einem Granulat zerkleinert, 5 Stunden bei 110°C getrocknet und in einer Presse Platten mit einer Dicke von 2 mm bei einer Temperatur von 180°C hergestellt. Der Polyurethanharnstoff besitzt folgende Eigenschaften:

| | |
|---|---|
| Härte | 73 Shore A |
| Zugfestigkeit | 24,7 MPa |
| Reißdehnung | 420 % |
| relative Lösungsviskosität | 2,79 (0,5 Gew.-proz. in Dimethylacetamid |

### Beispiel 8 (Polyurethanharnstoff auf der Basis eines aromatischen Diisocyanates)

In einem 3 l-Dreihalskolben mit Innenthermometer, mechanischer Rührung, und Stickstoffeinlaß werden 1250 g (1,25 Hydroxyläquivalente) Polyol A und 312,5 g (2,5 Isocyanatäquivalente) Diisocyanat B gegeben, und unter Stickstoffatmosphäre bei 100°C solange gerührt, bis der Isocyanatgehalt auf 3,36 Gew.-% gesunken ist. Man senkt die Temperatur auf 60°C und gibt eine Mischung aus 90 g Wasser und 62,4 g des Emulgators aus Beispiel 5 dazu. Es wird eine Minute gerührt und die Reaktionsmasse auf eine PTFE-Folie gegossen. Die Reaktionsmasse wird in einem Polyethylenbeutel bei 70°C ausreagiert. Der Polyurethanharnstoff ist nach ca. 15 Minuten entformbar und wird 24 h bei 70°C und 24 h bei 110°C nachgeheizt. Der Polyurethanharnstoff wird zu einem Granulat zerkleinert und in einer Presse Platten mit einer Dicke von 2 mm bei einer Temperatur von 180°C hergestellt. Der Polyurethanharnstoff besitzt folgende Eigenschaften:

| | |
|---|---|
| Härte | 68 Shore A |
| Zugfestigkeit | 20,3 MPa |
| Reißdehnung | 930 % |
| Wärmestand aus der Schubmodulkurve | 190°C |
| relative Lösungsviskosität | 1,74 (0,5 Gew.-proz. in Dimethylacetamid) |

### Beispiel 9 (Polyurethanharnstoff auf der Basis eines aromatischen Diisocyanates)

In einem 5 l-Dreihalskolben mit Innenthermometer, mechanischer Rührung, und Stickstoffeinlaß werden 2000 g (2,0 Hydroxyläquivalente) Polyol A und 450,0 g (3,6 Isocyanatäquivalente) Dissocyanat B gegeben, und unter Stickstoffatomosphäre bei 100°C solange gerührt, bis der Isocyanatgehalt auf 2,74 Gew.-% gesunken ist. Man senkt die Temperatur auf 60°C und gibt eine Mischung aus 90 g Wasser und 62,4 g des Emulgators aus Beispiel 5 dazu. Es wird eine Minute gerührt und die Reaktionsmasse auf eine PTFE-Folie gegossen. Die Reaktionsmasse wird in einem Polyethylenbeutel bei 70°C ausreagiert. Der Polyurethanharnstoff ist nach ca. 15 Minuten entformbar und wird 24 h bei 70°C und 24 h bei 110°C nachgeheizt. Der Polyurethanharnstoff wird zu einem Granulat zerkleinert und in einer Presse Platten mit einer Dicke von 2 mm bei einer Temperatur von 180°C hergestellt. Der Polyurethanharnstoff besitzt folgende Eigenschaften:

| | |
|---|---|
| Härte | 66 Shore A |
| Zugfestigkeit | 21,6 MPa |
| Reißdehnung | 940 % |
| Wärmestand aus der Schubmodulkurve | 187°C |
| relative Lösungsviskosität | 1,79 (0,5 Gew.-proz. in Dimethylacetamid) |

### Beispiel 10 (kontinuierliche Herstellung eines Polyurethanharnstoffs auf der Basis eines aromatischen Diisocyanates)

In die Einspeisetrichter einer üblichen Schneckenmaschine werden kontinuierlich dosiert:
A) 2500 g/h Teile eines Prepolymers aus
   a) 4,0 kg (8,0 Hydroxyläquivalente) Polyol C,
   b) 1,5 kg (12,0 Isocyanatäquivalente) Isocyanat B,
   c) 35,1 g Ethylenbisstearylamid und
   d) 3,51 g 2,6-Di-tert-butyl-4-methylphenol
   mit einem Isocyanatgehalt von 3,0 Gew.-% in den Einspeisetrichter im ersten Schneckengehäuse und
B) 250 g/h Teile einer Mischung aus
   e) 80 Teilen Wasser und
   f) 40 Teilen Emulgator aus Beispiel 5
in den Einspeisetrichter im dritten Schneckengehäuse.

Die Temperaturführung ist Tabelle 3 zu entnehmen.

**Tabelle 3**

| | | | | | | | | | |
|---|---|---|---|---|---|---|---|---|---|
| Gehäuse | 1 | 2 | 3 | 4 | 5 | 6 | 7 | 8 | 9 |
| Beispiel 10 | 70 | 70 | 70 | 70 | 100 | 130 | 170 | 200 | 180 |

Nach Austritt aus der Düse wird der Polyurethanharnstoff durch ein Kühlbad abgezogen und granuliert. Der Polyurethanharnstoff besitzt die in Tabelle 4 beschriebenen Eigenschaften.

**Tabelle 4.**

| Beispiel | relative Lösungsviskosität*⁾ | Härte Shore A | Zugfestigkeit in MPa | Zugdehnung in % |
|---|---|---|---|---|
| 10 | 1,67 | 70 | 16,3 | 720 |

| | | | | |
|---|---|---|---|---|
| ^{*)} 0,4 prozentig in N-Methylpyrrolidon | | | | |

## Patentansprüche

1. Thermoplastischer Polyurethanharnstoff, erhältlich durch gegebenfalls stufenweise Reaktion von
a) einem oder mehreren Polyisocyanaten mit
b) einer oder mehreren Verbindungen mit im Mittel mindestens 1,8 zerewitinoffaktiven Wasserstoffatomen und einem Molekulargewicht zwischen 400 und 10000,
c) Wasser und
d) gegebenfalls weiteren üblichen Hilfs- und Zusatzstoffen mit Ausnahme von Diaminen,
dadurch gekennzeichnet, daß das Wasser zusammen mit einer wirksamen Menge eines oder mehrerer Emulgatoren bei Temperaturen von 30°C bis 110°C in das Reaktionsgemisch eingebracht wird und die Umsetzung zum Polyurethanharnstoff bei Temperaturen von 50°C bis 220°C erfolgt.

2. Thermoplastischer Polyurethanharnstoff gemäß Anspruch 1, dadurch gekennzeichnet, daß es sich bei dem Emulgator oder ggf. Gemisch aus Emulgatoren um ein Polyoxyalkylen handelt, welches mindestens eine Hydroxylgruppe trägt und welches einen Gehalt an Oxyethyleneinheiten von mindestens 20 Gew.-% besitzt.

3. Thermoplastischer Polyurethanharnstoff gemäß Anspruch 1 und 2, dadurch gekennzeichnet, daß das Äquivalentverhältnis zwischen der Komponente b) und der Komponente c) zwischen 5:1 und 1:30 beträgt.

4. Thermoplastischer Polyurethanharnstoff gemäß Anspruch 1 bis 3, dadurch gekennzeichnet, daß das Verhältnis aus Isocyanatäquivalenten aus Komponente a) und der Summe der Äquivalente an zerewitinoffaktiven Wasserstoffatomen aus Komponente b) und Komponente c) insgesamt unter 1,1:1 liegt.

5. Verfahren zur Herstellung von Polyurethanharnstoffen gemäß den Ansprüchen 1 bis 4 aus
a) einem oder mehreren Polyisocyanaten,
b) einer oder mehreren Verbindungen mit im Mittel mindestens 1,8 zerewitinoffaktiven Wasserstoffatomen und einem Molekulargewicht zwischen 400 und 10000,
c) Wasser und
d) gegebenfalls weiteren üblichen Hilfs- und Zusatzstoffen mit Ausnahme von Diaminen,
dadurch gekennzeichnet, daß das Wasser zusammen mit einer wirksamen Menge eines oder mehrerer Emulgatoren bei Temperaturen von 30°C bis 110°C in das Reaktionsgemisch eingebracht wird und die Umsetzung zum Polyurethanharnstoff bei Temperaturen von 50°C bis 220°C erfolgt.

6. Verfahren zur Herstellung von Polyurethanharnstoffen gemäß Anspruch 5, dadurch gekennzeichnet, daß
i) aus zumindest Teilen der Komponente a) und zumindest Teilen der Komponente b) ein Vorpolymer hergestellt wird und
ii) dieses Vorpolymer zusammen mit den restlichen Ausgangsstoffen und den verbliebenen Anteilen der Komponenten a) und b) zum Polyurethanharnstoff umgesetzt wird.

7. Verfahren zur diskontinuierlichen Herstellung von Polyurethanharnstoffen gemäß Anspruch 5 und 6, dadurch gekennzeichnet, daß das Wasser der Komponente c) zusammen mit dem Emulgator bei Temperaturen zwischen 30°C und 110°C in das Reaktionsgemisch bestehend aus den restlichen Ausgangsstoffen eingetragen wird und die Umsetzung zum Polyurethanharnstoff bei Temperaturen zwischen 50°C und 110°C stattfindet.

8. Verfahren zur Herstellung von Polyurethanharnstoffen gemäß Anspruch 5 oder 6, dadurch gekennzeichnet, daß die Umsetzung zum Polyurethanharnstoff in einer ggf. mit Knetelementen bestückten Mehrwellenschneckenmaschine mit selbstreinigender Schneckengeometrie bei Temperaturen zwischen 50°C und 220°C stattfindet, wobei das Wasser zusammen mit dem Emulgator bei Temperaturen zwischen 30°C und 110°C in das Reaktionsgemisch eingetragen wird.

9. Verfahren zur Herstellung von Polyurethanharnstoffen gemäß Anspruch 8, dadurch gekennzeichnet, daß das Wasser zusammen mit dem Emulgator in Förderrichtung gesehen hinter den übrigen Ausgangsstoffen in die Schneckenmaschine eingespeist wird.

10. Verwendung der Polyurethanharnstoffe gemäß Anspruch 1 bis 4 zur Herstellung von Form-, Preß- und Spritzgußteilen, Thermoformteilen, Halbzeugen, Platten, Behältern, Geräteteilen, Gehäusen, Rollen, Zahnrädern, Maschinen- und Fahrzeugteilen, Walzen, elastischen Überzügen, Folien, Ummantelungen, Schläuchen, Kathetern, Dichtungen, Profilen, Lagerschalen und Fäden.

## Claims

1. Thermoplastic polyurethane urea obtainable by the reaction, optionally stepwise, of
a) one or more polyisocyanates with
b) one or more compounds having on average at least 1.8 Zerewitinoff-active hydrogen atoms and a molecular weight of between 400 and 10,000,
c) water and
d) optionally further conventional auxiliary substances and additives, with the exception of diamines,
characterised in that the water together with an effective quantity of one or more emulsifiers is introduced into the reaction mixture at temperatures of from 30°C to 110°C and the conversion to polyurethane urea is carried out at temperatures of from 50°C to 220°C.

2. Thermoplastic polyurethane urea according to claim 1, characterised in that the emulsifier or optionally mixture of emulsifiers is a polyoxyalkylene having at least one hydroxyl group and a content of oxyethylene units of at least 20 wt.%.

3. Thermoplastic polyurethane urea according to claims 1 and 2, characterised in that the equivalent ratio of component b) to component c) is between 5:1 and 1:30.

4. Thermoplastic polyurethane urea according to claims 1 to 3, characterised in that the ratio of the isocyanate equivalents from component a) to the sum of the equivalents of Zerewitinoff-active hydrogen atoms from component b) and component c) is in total less than 1.1:1.

5. Process for the preparation of polyurethane ureas according to claims 1 to 4 from
a) one or more polyisocyanates,
b) one or more compounds having on average at least 1.8 Zerewitinoff-active hydrogen atoms and a molecular weight of between 400 and 10,000,
c) water and
d) optionally further conventional auxiliary substances and additives, with the exception of diamines,
characterised in that the water together with an effective quantity of one or more emulsifiers is introduced into the reaction mixture at temperatures of from 30°C to 110°C and the conversion to polyurethane urea is carried out at temperatures of from 50°C to 220°C.

6. Process for the preparation of polyurethane ureas according to claim 5, characterised in that
i) a prepolymer is prepared from at least portions of component a) and at least portions of component b) and
ii) this prepolymer is reacted together with the rest of the starting materials and the remaining portions of components a) and b) to form polyurethane urea.

7. Process for the batchwise preparation of polyurethane ureas according to claims 5 and 6, characterised in that the water constituting component c) together with the emulsifier is introduced at temperatures of between 30°C and 110°C into the reaction mixture consisting of the rest of the starting materials, and the conversion to polyurethane urea is carried out at temperatures of between 50°C and 110°C.

8. Process for the preparation of polyurethane ureas according to claim 5 or 6, characterised in that the conversion to polyurethane urea is carried out at temperatures of between 50°C and 220°C in a multishaft screw extruder optionally equipped with kneading elements and with a self-cleaning screw geometry, with the water together with the emulsifier being introduced into the reaction mixture at temperatures of between 30°C and 110°C.

9. Process for the preparation of polyurethane ureas according to claim 8, characterised in that the water together with the emulsifier is introduced into the screw extruder behind the other starting materials, viewed in the direction of delivery.

10. Use of the polyurethane ureas according to claims 1 to 4 for the preparation of moulded articles, mouldings and injection-moulded parts, thermoformed parts, semifinished goods, plates, containers, equipment parts, housings, rolls, gearwheels, machine and vehicle parts, cylinders, elastic coatings, films, casings, flexible tubing, catheters, seals, profiles, bearing shells and fibres.

## Revendications

1. Polyuréthane-urée thermoplastique obtenu par réaction éventuellement en étapes
a) d'un ou plusieurs polyisocyanates avec
b) un ou plusieurs composés présentant en moyenne au moins 1,8 atomes d'hydrogène actifs pour la réaction de Zerewitinoff et un poids moléculaire compris entre 400 et 10 000,
c) de l'eau et
d) éventuellement d'autres auxiliaires et additifs classiques à l'exception de diamines,
caractérisé en ce que l'on introduit l'eau dans le mélange réactionnel avec une quantité efficace d'un ou plusieurs émulsionnants à des températures de 30°C à 110°C et on réalise la transformation en polyuréthane-urée à des températures de 50°C à 220°C.

2. Polyuréthane-urée thermoplastique selon la revendication 1, caractérisé en ce qu'il s'agit pour l'émulsionnant ou éventuellement pour le mélange d'émulsionnants d'un polyoxyalkylène, lequel porte au moins un groupe hydroxyle et lequel présente une teneur en unités oxyéthylène d'au moins 20% en poids.

3. Polyuréthane-urée thermoplastique selon les revendications 1 et 2, caractérisé en ce que le rapport d'équivalent entre le constituant b) et le constituant c) est compris entre 5 :1 et 1:30.

4. Polyuréthane-urée thermoplastique selon les revendications 1 à 3, caractérisé en ce que le rapport des équivalents isocyanate du constituant a) et de la somme des équivalents de tous les atomes d'hydrogène actifs pour la réaction de Zerewitinoff du constituant b) et du constituant c) est inférieur à 1,1 :1.

5. Procédé pour la préparation de polyuréthanes-urées selon les revendications 1 à 4 à partir
a) d'un ou plusieurs polyisocyanates,
b) d'un ou plusieurs composés présentant en moyenne au moins 1,8 atomes d'hydrogène actifs pour la réaction de Zerewitinoff et un poids moléculaire compris entre 400 et 10 000,
c) d'eau et
d) éventuellement d'autres auxiliaires et additifs classiques à l'exception de diamines,
caractérisé en ce que l'on introduit l'eau dans le mélange réactionnel avec une quantité efficace d'un ou plusieurs émulsionnants à des températures de 30°C à 110°C et on réalise la transformation en polyuréthane-urée à des températures de 50°C à 220°C.

6. Procédé pour la préparation de polyuréthanes-urées selon la revendication 5, caractérisé en ce que
i) on prépare un prépolymère à partir d'au moins des parties du constituant a) et d'au moins des parties du constituant b) et
ii) on transforme ce prépolymère avec les matières premières restantes et les parties restantes des constituants a) et b) en polyuréthane-urée.

7. Procédé pour la préparation discontinue de polyuréthanes-urées selon les revendications 5 et 6, caractérisé en ce que l'on introduit l'eau du constituant c) avec l'émulsionnant à des températures comprises entre 30°C et 110°C dans le mélange réactionnel constitué des matières premières restantes et la transformation en polyuréthane-urée a lieu à des températures comprises entre 50°C et 110°C.

8. Procédé pour la préparation de polyuréthanes-urées selon la revendication 5 ou 6, caractérisé en ce que la transformation en polyuréthane-urée a lieu dans une machine à vis sans fin à plusieurs arbres munie éventuellement d'éléments de malaxage avec une géométrie autonettoyante de la vis sans fin à des températures comprises entre 50°C et 220°C, l'eau étant introduite dans le mélange réactionnel avec l'émulsionnant à des températures comprises entre 30°C et 110°C.

9. Procédé pour la préparation de polyuréthanes-urées selon la revendication 8, caractérisé en ce que l'on introduit l'eau dans la machine à vis sans fin avec l'émulsionnant dans la direction du transport après les autres matières premières.

10. Utilisation des polyuréthanes-urées selon les revendications 1 à 4, pour la préparation de pièces moulées, moulées par compression et moulées par injection, de pièces thermo-moulées, de produits semi-finis, de plaques, de récipients, de pièces d'appareils, de boîtiers, de rouleaux, de roues dentées, de pièces pour machines et véhicules automobiles, de tambours, de revêtements élastiques, de feuilles, de gaines, de tuyaux, de cathéters, de joints, de profils, de coquilles de coussinets et de fils.
